# EUROPEAN PATENT APPLICATION

(11) **EP 4 458 679 A1**
(43) Date of publication of application: **06.11.2024**
(21) Application number: 23275073.7
(22) Date of filing: 03.05.2023
(51) Int. Cl.: B64D 33/02, B64D 43/02, G01P 5/165, B64D 27/20, B64D 15/12

(54) **AIRFLOW MODIFYING DEVICE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An airflow modifying device for use in an engine duct comprising: a flow inlet; a flow outlet; and a flow passage extending from the flow inlet to the flow outlet; wherein the device is arranged to receive an incident air flow; and wherein the device is configured to at least partially modulate the air flow in the flow passage to improve flow ordering of the incident airflow, the airflow modifying device further comprising: at least one pitot sensor integral with the device located at the flow inlet; and a pressure line comprising a first end and a second end, the first end connected to the pitot sensor and the second end configured to be connected to a transducer; wherein the pressure line is completely enclosed within the device.

## Description

### FIELD

The present invention relates to airflow modifying devices for measuring pitot pressure for use in engine ducts, more particularly jet aircraft engine ducts.

### BACKGROUND

Pitot sensors are used to measure fluid flow velocity and find utility in measuring airspeed of aircraft. A pitot sensor generally comprises a tube, closed at one end, with an open end pointing directly into an incident fluid flow, e.g. an airflow. In use, the fluid flow moves into the tube where it is brought to rest due to the absence of any outlet in the tube. The stagnation pressure can be measured within this tube and the fluid flow velocity can be calculated as a standard function of the difference between the stagnation pressure and ambient pressure.

Traditionally, pitot sensors are mounted on the outer surface of a vehicle, for example an aircraft. Pitot sensors are usually mounted off the surface of a vehicle, outside the boundary layer so as to negate fluid disturbances caused by the vehicle itself. As such, pitot sensors are particularly prone to damage on the ground and in the case of aircraft, in the air. This may be caused by a person or equipment inadvertently coming into contact with the exposed pitot sensor and damaging the sensor or when in flight, e.g. a bird strike or contact with an in-flight refuelling drogue. Also, pitot sensors may be blocked by nesting insects or wind- blown debris unless suitably covered. A damaged or blocked pitot sensor is especially dangerous for the safety of an aircraft as airspeed indicators in the cockpit may give erroneous readings which may cause a pilot to make fatal errors in controlling the aircraft or cause sub systems which use such data to malfunction, e.g. autopilot. Further, in the case of military stealth aircraft, exposed protrusions extending from the surface of an aircraft are undesirable as these increase radar reflections thereby increasing the overall radar cross section of the aircraft. There is therefore a need to at least partially reduce or eliminate the potential for damage to a pitot sensor.

### SUMMARY

According to an aspect of the present invention, there is provided an airflow modifying device for use in an engine duct comprising: a flow inlet; a flow outlet; and a flow passage extending from the flow inlet to the flow outlet; wherein the device is arranged to receive an incident air flow; and wherein the device is configured to at least partially modulate the airflow in the flow passage to improve flow ordering of the incident airflow, the airflow modifying device further comprising: at least one pitot sensor integral with the device located at the flow inlet; and a pressure line comprising a first end and a second end, the first end connected to the pitot sensor and the second end configured to be connected to a transducer; wherein the pressure line is completely enclosed within the device.

Air pressure of the incident airflow may be measured directly at the engine face via the integrated pitot sensor within the airflow modifying device without the need for externally mounted pitot sensors which may be damaged or which may contribute to an increased radar cross section when used on a military stealth aircraft. The airflow modifying device may be used in an engine duct. The engine duct is a plenum designed to direct air from the outside atmosphere to the engine face of an engine. In modern military aircraft, engines are usually located within the aircraft fuselage for a number of reasons such as reducing the rolling moment of the aircraft, allowing incident airflow to be sufficiently slowed and reducing the radar cross section of the aircraft. Incident airflow on the aircraft is directed from the outside atmosphere to the engine face by the engine duct. The engine duct may follow a linear path or may follow a convoluted path, that is to say, there may be provided one or more changes in direction within the engine duct to direct the incident air to the engine face. In both linear and convoluted path engine ducts, the incident airflow is disturbed from a laminar flow to a turbulent flow such that that at a given cross section of the engine duct, pressure is circumferentially asymmetric i.e. radially non-uniform. Circumferentially asymmetric incident airflow is undesirable at the engine face as this may decrease the performance of the engine and even lead to some blades on the engine fan stalling. As such, one or more airflow modifying devices may be used in the engine duct in order to at least partially restore the incident airflow to a laminar flow such that the incident airflow is more circumferentially symmetric at the engine face.

The present inventors have found that incorporation of a pitot sensor within the airflow modifying device allows accurate measurement of the incident air flow on the aircraft to be estimated negating the need for external pitot sensors to be mounted on the aircraft. As such, the airflow modifying device comprises a pitot sensor located at the flow inlet of the airflow modifying device. The pitot sensor is integral with the airflow modifying device such that it does not protrude from the outer surface of the device. The pitot sensor is generally orientated substantially in the direction of the incident airflow. The pressure line is connected to the pitot sensor at a first end. The pressure line may be connected to a transducer at a second end. The pressure line may be a hollow passage formed within the device which allows incident air to collect within the passage and come to rest wherein the transducer is configured to measure the stagnant pressure within the pressure line in order to infer airspeed. Alternatively, the pressure line may be formed as a separate material within the device e.g. a hollow tube embedded within the device. The pressure line is completely enclosed within the airflow modifying device. That is to say, the pressure line does not extend outside the outer mould line of the airflow modifying device between the first and second ends which minimises further flow disturbances in the engine duct before the air reaches the engine face.

In some arrangements, the airflow modifying device may comprise a spoke design. The spoke design may comprise a core hub and at least one blade extending radially therefrom. Each blade may comprise a blade root proximal to the core hub and a blade tip at the distil end. The blade(s) may be enclosed by a housing. The blade may comprise an integrated pressure line arranged to connect the pitot sensor to the blade tip. In an alternative arrangement, the blade may comprise an integrated pressure line arranged to connect the pitot sensor to the blade root. The routing of the pressure line to the blade tip or blade route is dictated by the positioning of the transducer. The integrated pressure line may be completely enclosed within the blade such that the pressure line does not extend outside the outer mould line of the blade between the first and second ends. The blade may be fixedly attached to the core hub using a mechanical fastener, adhesive or interference fit or may alternatively be formed with the core hub from a single billet or through additive manufacturing techniques. There may be a plurality of blades extending radially from the core hub. The blades may be equally radially distributed around the core hub or may be irregularly distributed around the core hub. Preferably there is a plurality of blades in a range of from 5 to 30, more preferably 12 to 20 distributed around the core hub. Each blade may comprises a cross sectional thickness in the range of from 3mm to 10mm. The blades may be substantially co-linear with the engine duct, or in the case of a convoluted engine duct, substantially in line with the direction of incident airflow. Alternatively, the blade may be offset at a predetermined angle to the incident airflow. Arrangement of each blade relative to the incident airflow will be known to the skilled person dependent on the speed, angle of incidence and swirl characteristics of the incident airflow. There may be provided a single pitot sensor in the at least one blade. A single blade may comprise a plurality of pitot sensors, for example, distributed along the leading edge of the blade. This may provide redundancy in measuring a specific area of airflow. When there is provided a plurality of blades, there may be more than one pitot sensor, for example each blade may comprise at least one pitot sensor. In an alternative arrangement, the plurality of pitot sensors may be distributed irregularly amongst the plurality of blades.

In an alternative arrangement, the airflow modifying device may comprise a honeycomb design. A honeycomb design may comprise a plurality of cells separated by a cell wall arranged to modulate the incident airflow. The cross sectional shape of the cells may be square, rectangular, circular, pentagonal, hexagonal or any other higher sided shape which is arranged to tessellate. The cross sectional width or circumference of each cell may be in the range of from 10mm to 300 mm, more preferably 75mm to 125mm, more preferably 100mm.The width of the cell wall will be dictated by the needs of the system and is known by the skilled person however it will be appreciated that the width of the cell wall should be sufficient to incorporate the pitot sensor at the flow inlet and enclose the pressure line inside the cell wall.

The airflow modifying device may comprise a plurality of pitot sensors. This may allow an average to be taken between pitot sensors in order to infer a more accurate airspeed of the aircraft. The average may be the mean, mode or median of the measured values. Further, if three or more pitot sensors are provided, outlying data can be identified and ignored, for example by majority voting. There may be a plurality of pitot sensors distributed on a single blade or cell of the airflow modifying device.

The pitot sensor may comprise a bell mouth orifice. Preferably, non aligned incident airflow may be captured by a bell mouth orifice which may improve the accuracy of the pitot sensor. In one arrangement, the cross sectional diameter of the bell mouth orifice may be equal to the width of a leading edge of the blade or cell wall. This may allow the stagnation pressure to be accurately captured.

The airflow modifying device may comprise a transducer located in the device or external to the device. The arrangement in the device may reduce the length of the pressure line thereby at least partially reducing lag in obtaining pitot sensor measurements. The transducer may be mounted inside the blade or cell wall of the device of the airflow modifying device. Alternatively when the device is a spoke design, the transducer may be located in the hub of the device or in or proximal to the housing of the device.

The airflow modifying device may comprise a de-icing mechanism. The de-icing mechanism may be an electric heater, optionally integral with the device. In an alternative arrangement, the pressure line may be arranged to receive an electric current thereby facilitating de-icing of the pressure line.

The airflow modifying device may comprise a second sensor selected from the group comprising: a static pressure sensor or temperature sensor. This arrangement may allow further measurements to be inferred such as flow direction across the engine face and swirl within the engine duct. Further, when a temperature sensor is used in conjunction with a de-icing mechanism in the airflow modifying device, ice detection may be facilitated completely within the device wherein the de-icing mechanism is activated in response to a temperature threshold being reached.

The airflow modifying device may be made of a metal or metal alloy.

According to a second aspect, there is provided a jet aircraft comprising an engine duct having an inlet for receiving an incident airflow and an outlet for directing the airflow to an engine face, the engine duct comprising the airflow modifying device according to the first aspect, wherein the airflow modifying device is located immediately preceding the engine face. In one arrangement, the engine duct is a convoluted engine duct. The jet aircraft may be a military jet aircraft, for example a fighter jet. The jet aircraft may be a stealth military aircraft.

According to a third aspect, there is provided a method of using an airflow modifying device comprising the steps of: providing an airflow modifying device according to the first or second aspect in an engine duct; providing an incident airflow; and measuring, using the pitot sensor, air pressure at the airflow modifying device.

According to a fourth aspect, there is provided a method of manufacturing an airflow modifying device according to the first aspect comprising: providing a blade or honeycomb cell wall; and forming a channel in the blade or cell wall to form a pressure line.

In one arrangement, the method may comprise forming the channel by machining or additive manufacture techniques. Preferably, machining the airflow modifying device from a single billet tends to improve mechanical rigidity of the device. Smooth channels may be machined to form the pressure line using conventional drilling techniques such a gun drill. Alternatively, additive manufacturing techniques may allow internal geometries for the pitot sensor and pressure line to be introduced into the airflow modifying device that are not otherwise possible using conventional machining techniques.

### BRIEF DESCRIPTION OF THE FIGURES

Embodiments of the invention will now be described by way of example only with reference to the figures, in which:
Figure 1 shows an example of the prior art wherein pitot sensors are mounted on the exterior of an aircraft;
Figure 2 shows an example of a schematic diagram of an engine duct in an aircraft comprising the airflow modifying device according to the invention;
Figure 3 shows a schematic diagram of the engine duct of Figure 2;
Figures 4a & 4b show a spoke design airflow modifying device;
Figure 5 shows a cross sectional diagram of an airflow modifying device blade; and
Figure 6 shows a honeycomb design airflow modifying device.

### DETAILED DESCRIPTION

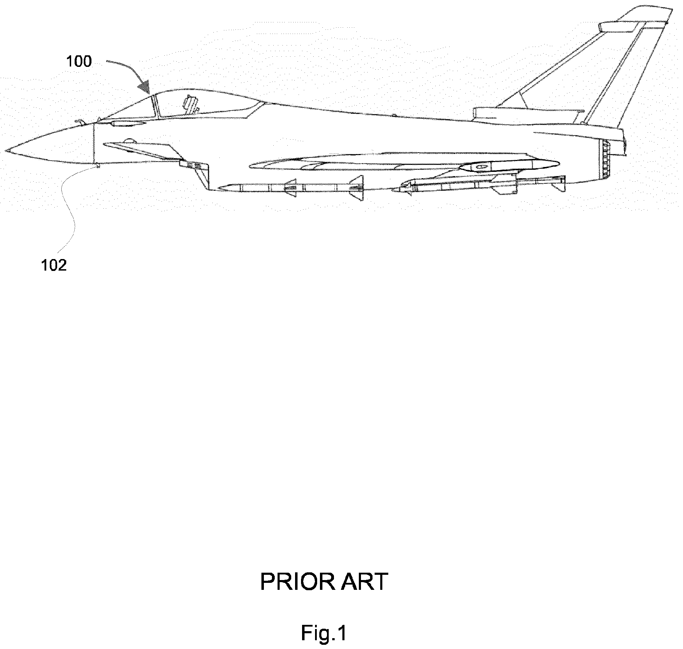

Figure 1 shows an example of the prior art. There is shown an aircraft 100, in this example a fighter jet aircraft, comprises a plurality of pitot sensors 102 mounted on the underside of the aircraft 100 nose although in alternative arrangements, the pitot sensor(s) 102 may be mounted on the tip of the nose of the aircraft or on a leading edge of the aircraft, for example a wing, extending into the free airflow. The pitot sensors 102 are used to measure air speed of the aircraft and are optionally configured to calculate other aircraft parameters such as static pressure, angle of attack and side slip. When the pitot sensors 102 are mounted on the outside of the aircraft 100, they are vulnerable to inadvertent damage and blockage by nesting animals or debris. Further, such protrusions increase the radar cross section of the aircraft which is undesirable in stealth aircraft.

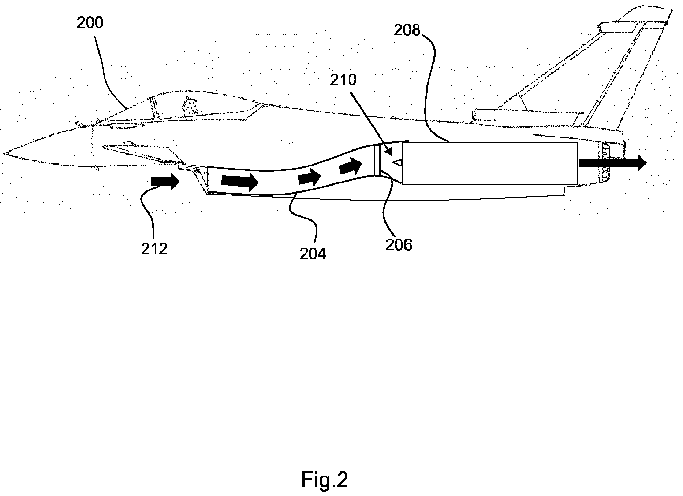

Figure 2 shows example of a schematic diagram of an engine duct 204 in an aircraft 200 comprising the airflow modifying device 206 according to the invention. In this example, the aircraft comprises an internal engine 208 with an engine face 210 housed within the super structure of the aircraft 200. In order to deliver incident airflow 212 to the engine face 210 of the engine, the engine duct 204 comprises an inlet towards the front of the aircraft for directing air internally within the aircraft 200 superstructure to the engine face 210. The incident airflow 212 is a fluid in a substantially laminar flow. As the incident airflow 212 enters the engine duct 204, turbulence is caused such that the cross sectional flow at any point in the engine duct 204 is circumferentially asymmetric. In order to at least partially modulate the flow and restore the flow to a laminar condition at the engine face 210, a airflow modifying device 206 is provided immediately preceding the engine face 210. The airflow modifying device 206 comprises a geometry which is configured to modulate the flow.

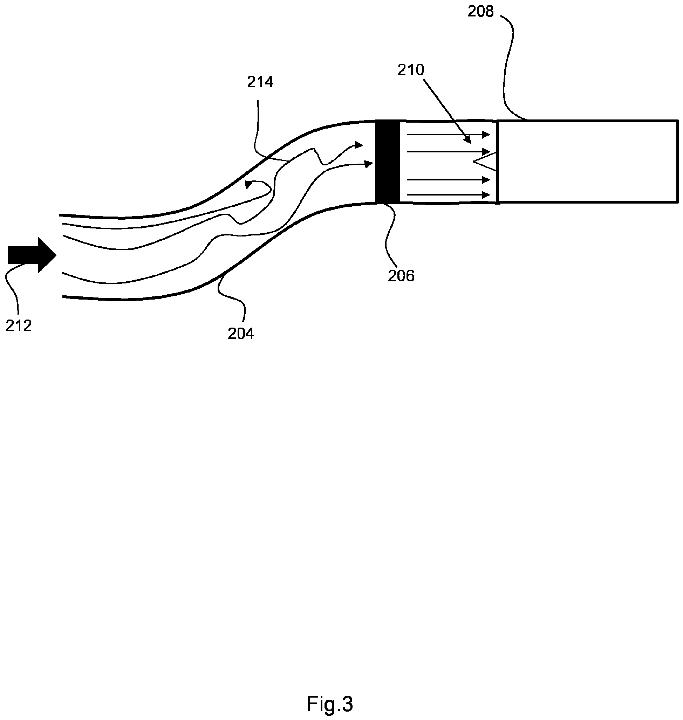

Figure 3 shows the engine duct of Figure 2 in more detail. As incident airflow 212 enters the engine duct 204, the flow transitions from a substantially laminar flow to a turbulent flow as indicated by flow arrows 214. As the turbulent airflow passes through the inlet of the airflow modifying device, the flow is modulated and restored to an at least partially laminar flow at the engine face 210.

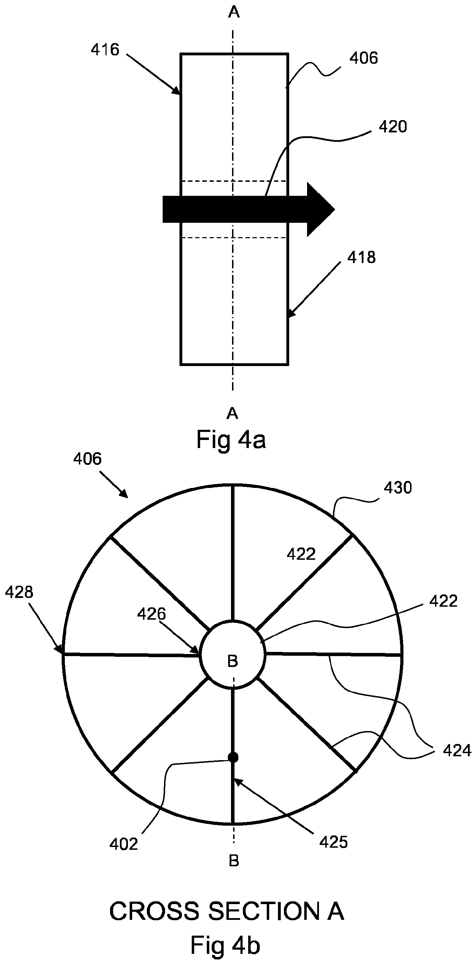

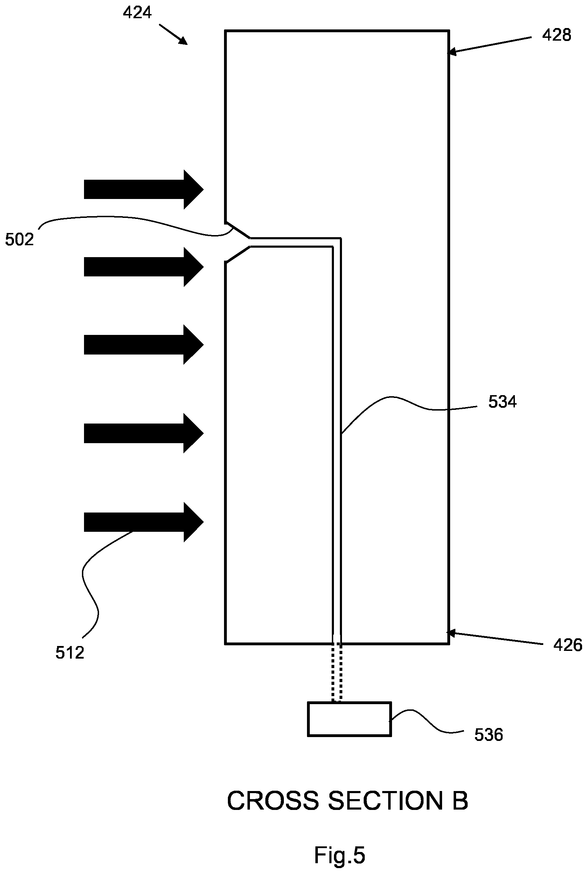

The airflow modifying device will now be described in more detail. Figures 4a & 4b show an example of a spoke design airflow modifying device 406. Figure 4a shows a side view of the airflow modifying device 406 and Figure 4b shows a cross sectional diagram along axis-A of Figure 4a. In Figure 4a, the airflow modifying device 406 comprises a flow inlet 416, a flow outlet 418 and a flow passage 420 extending from the flow inlet 416 to the flow outlet 418. In Figure 4b, the airflow modifying device 406 comprises a core hub 422 and eight blades 424 radially extending from the core hub 422 in an equiangular arrangement. Each blade 424 comprise a blade root 426 located proximal to the core hub 422 and the blade tip 428 at the distal end of each blade 424. In this arrangement, the blade tips 428 of each of the blades 424 are enclosed by a housing 430. In this arrangement, the core hub 422, blades 424 and housing 430 are a made from a single body produced for example by additive manufacture although in an alternative arrangement, they may be made from discreet components joined mechanically, chemically or comprising a joining geometry to enable an interference fit. In this arrangement, one of the blades 425 comprises an integral pitot sensor 402, which may be more clearly seen in Figure 5.

Figure 5 shows a cross sectional view along axis B of the blade 424 of Figure 4b. In particular, there is shown the blade 424 comprising the pitot sensor 502 integral with the blade 424 of the airflow modifying device. The pitot sensor 502 comprises a bell mouth orifice. There is also shown a pressure line 534 connected to the pitot sensor 502 at a first end and connected to a transducer 536 at a second end. The pressure line 534 is completely enclosed within the blade 424 of the airflow modifying device between the first and second ends. In use, incident airflow enters the pitot sensor 502 and comes to rest within the pressure line 534. The transducer 536 is configured to measure the stagnant pressure within the pressure line 534 which may then be used to infer an airspeed of the incident air 512. In this arrangement the transducer 536 is shown as external to the blade 424 proximal to the blade root 426, the transducer 536 may alternatively be located within the blade 424.

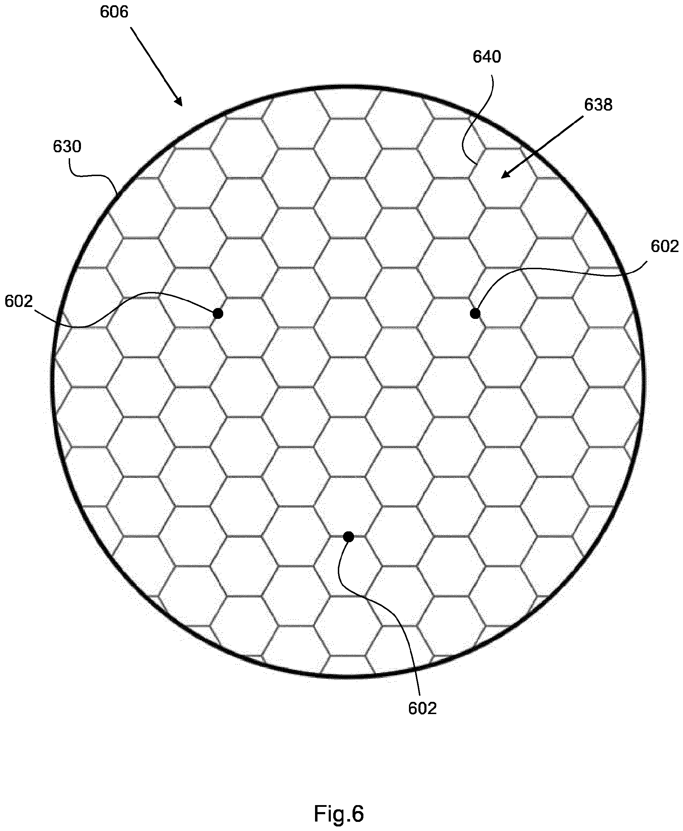

Figure 6 shows an alternative arrangement of an airflow modifying device 606 according to the invention. In this example, the airflow modifying device 606 is as shown in Figure 4 (406) however, instead of a core hub 422 and blades 424, the airflow modifying device 606 comprises a honeycomb design comprising a plurality of hexagonal cells 638, each cell separated by a cell wall 640. The cells 638 are bounded by a housing 630 as in Figure 4. In this example, there is provided a plurality of pitot sensors 602 integral with the cell walls 640 of the airflow modifying device 606. The pitot sensors 602 are formed within the cell walls 640 (not to scale). Each pitot sensor 602 comprises a respective pressure line (not shown) completely enclosed within the cell walls 640.

## Claims

1. An airflow modifying device for use in an engine duct comprising:
a flow inlet;
a flow outlet; and
a flow passage extending from the flow inlet to the flow outlet;
wherein the device is arranged to receive an incident air flow; and
wherein the device is configured to at least partially modulate the air flow in the flow passage to improve flow ordering of the incident airflow,
the airflow modifying device further comprising:
at least one pitot sensor integral with the device located at the flow inlet; and
a pressure line comprising a first end and a second end, the first end connected to the pitot sensor and the second end configured to be connected to a transducer;
wherein the pressure line is completely enclosed within the device.

2. The airflow modifying device according to claim 1 wherein the device comprises a spoke design or a honeycomb design.

3. The airflow modifying device according to claim 2 wherein the device is a spoke design comprising:
a core hub; and
at least one blade extending radially therefrom,
each blade comprising a blade root proximal to the core hub and a blade tip at the distil end, the integrated pressure line arranged to connect the pitot sensor to the blade root or tip.

4. The airflow modifying device according to claim 3 wherein the blade comprises a cross sectional thickness in the range of from 3mm to 10mm.

5. The airflow modifying device according to any preceding claim wherein there is provided a plurality of pitot sensors.

6. The airflow modifying device according to any preceding claim wherein the pitot sensor comprises a bell mouth orifice.

7. The airflow modifying device according to any preceding claim comprising a transducer located in the device.

8. The airflow modifying device according to any preceding claim wherein the device comprises a de-icing mechanism.

9. The airflow modifying device according to any preceding claim wherein the device comprises a second sensor selected from the group comprising: a static pressure sensor or temperature sensor.

10. A jet aircraft comprising an engine duct having an inlet for receiving an incident airflow and an outlet for directing the airflow to an engine face, the engine duct comprising the airflow modifying device according to any preceding claim, wherein the airflow modifying device is located immediately preceding the engine face.

11. The aircraft according to claim 10 wherein the engine duct is a convoluted engine duct.

12. A method of using a airflow modifying device comprising the steps of:
providing a airflow modifying device according to any preceding claim in an engine duct;
providing an incident airflow; and
measuring, using the pitot sensor, air pressure at the airflow modifying device.

13. A method of manufacturing a airflow modifying device according to any preceding claim comprising:
providing a blade or honeycomb cell wall; and
forming a channel in the blade or cell wall to form a pressure line.

14. The method of claim 13 wherein the method further comprises forming the channel by machining or additive manufacture techniques.
